# EUROPEAN PATENT SPECIFICATION

(11) **EP 0 610 415 B1**
(45) Date of publication and mention of the grant of the patent: **08.01.1997**
(21) Application number: 92923970.5
(22) Date of filing: 30.10.1992
(51) Int. Cl.: G01K 1/08

(54) **A DEVICE FOR TEMPERATURE MEASUREMENT AND CONTROL**
Ein Gerät zum Messen und Ueberwachen der Temperatur
DISPOSITIF DE MESURE ET DE REGULATION DE TEMPERATURE

(30) Priority: 31.10.1991 IT MI912900
(43) Date of publication of application: 17.08.1994
(73) Proprietor: TESTEL S.p.A., I-29010 Castelvetro Piacentino (IT)
(72) Inventor: NOLI, Canzio, I-Busseto (IT)
(74) Representative: Aimi, Luciano
(86) International application number: IT9200135
(87) International publication number: WO9309415

(56) References cited:
- DE-A- 2 605 316
- GB-A- 1 252 754
- GB-A- 2 128 743
- GB-A- 2 183 342
- US-A- 4 416 553
- US-A- 4 601 589

## Description

This invention concerns a device for temperature measurement and control in industrial plants, in particular where use of programmable logic devices (known as PLC) is anticipated.

Many devices are known for measuring a temperature, comprising a probe or a transducer, adapted to provide as an output an electrical signal (usually an analog type signal) corresponding to the measured temperature value. These devices are associated with an amplifying unit and possibly with control and/or coding circuits in order to provide thermostatic transmitting or displaying devices (thermometers), or to be integrated in a more general control system.

A drawback affecting all of these known devices is the fact that the components are available as individual components, usually manufactured by different companies. This causes a negative influence on the complete system performance.

In fact, even though the single pieces have narrow manufacturing tolerances, the tolerance of the complete device comes out to be much larger (as a summation), and in any case there is left in addition an unavoidable sensitivity to drift problems (in time and operation) which cannot be evaluated, and therefore are impossible to be compensated, thus worsing the overall performance thereof.

GB-A-2183342 discloses a temperature measuring device consisting of two separate units comprising a transducer (thermocouple) and a logic microprocessor respectively, which are mutually connected through a free multi-way plug and socket fitting. The termocouple is individually calibrated by disconnecting it from microprocessor.

The microprocessor stores in a buffer or displays in digital form or converts in analog form the data obtained from an EPROM forming part of the transducer unit. US-A-4743121 relates to an impermeable monolithic clinical electrothermometer, wherein the temperature-sensing element is connected to an electronic circuit powered by an internal (replaceable?) battery.

US-A-4601589 describes an impermeable monolithic electrical pocket thermometer powered by a solar cell for measuring temperatures of liquids, snow, etc. GB-A-2128743 is concerned with a thermocouple for measuring surface temperatures, wherein the hot junction is attached to the surface whose temperature has to be measured, and is remotely connected to a detecting or reading device by a mineral insulated cable.

More particularly, in the conventional temperature monitoring systems the following error causes may be detected:
1. drift in time of the active and passive components;
2. undesired thermoelectric effects and/or an incorrect cold junction compensation;
3. drifts caused by variations in the behaviour of the electronics versus temperature;
4. interchangeability tolerance of the sensing member.

It is an object of this invention to overcome the limitations and the drawbacks of the state of the art, as mentioned above, and in particular to provide a monolithic device, highly precise and stable in time, and having a low cost for a more widespread utilization.

Since any mechanical adjustment is missing (potentiometers, trimmers, and so on), also the device reliability is consequently improved.

This invention meets these objects by means of a device for temperature measurement and control in the form of a monolithic watertight body including a temperature probe and a unit for processing the signal provided by said probe, said processing unit being formed by a sealed container incorporating a programmable microprocessor logic unit, and being electrically connected to said probe by a mineral insulated cable, wherein the processing unit comprises an own temperature sensor and a permanent memory in which both the internally read and reference temperature data obtained by calibration at predetermined reference temperatures are recorded.

According to a first embodiment, the device may be used as a thermostat, i.e. as a device adapted to react by opening or closing a contact once a predetermined precise temperature has been reached.

According to a second embodiment, the device is a device for processing and transmitting a proportional electrical signal which changes linearly versus temperature.

According to a third embodiment, the device comprises a temperature measuring device provided with a digital display.

This invention reduces the extent of the problems caused by the drift in time of the active and passive components by eliminating the use of trimmers which are the components more often responsible for these problems.

The other causes of error listed above for the known devices, and which are related to the temperature variations both in the sensing and in the electronic portion, are substantially eliminated by the inventive device. This is done through suitable calibration, i.e. by bringing to known and definite temperatures both the sensitive and electronic portions (the latter too containing a temperature sensor), and by recording in the permanent memory both the internally read data and the reference temperature data. In such a way, there is provided in the device memory a sort of "individual identification card" adapted to characterize the overall behaviour of the sensor and providing the sure basis for all possibile interpolations.

The above features and additional ones will become more apparent, together with the related advantages, from the following description of preferred but non limiting embodiments of the inventive device, taken together with the attached drawings, wherein:
Figure 1 is a partially sectional side view of the device according to the invention;
Figures 2 and 3 are a side and top plan views, respectively, of a further embodiment of the inventive device.

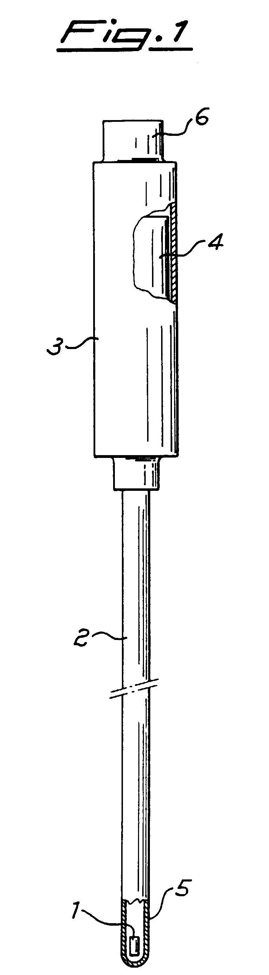

Figure 1 shows the inventive device with a construction suitable to be used both as a thermostat and as a temperature data transmitter.

The device shown therein includes a temperature probe, or sensitive member 1, received at the end of a segment of cable 2 having a close-packed mineral insulation, and whose opposite end is integrally fastened to a sealed container 3 housing a processing and control unit 4, in particular a logic microprocessor based unit. The opposite end of container 3 carries a standard type sealed connector 6 adapted to be connected with two or more leads, for the microprocessor unit power supply and the outputs of one or more electrical signals.

The temperature probe ia a thermocouple or, as an alternative, a platinum resistance thermometer.

The mineral insulation cable 2 provided with a stainless steel sheath has such a diameter and length to make it stiff enough to bear the assembly, still being flexible, or more precisely deformable in a semi-permanent way, so that the positioning and assembly of the device are made extremely easy. An exemplary length of the cable segment may vary between 100 mm and 1 meter, and even longer for more particular applications. The diameters range between a minimum of 2 mm and a maximum of 8-10 mm.

Container 3 comprises a stainless steel cylindrical body integral with cable sheath 5, i.e. permanently connected and free from connecting members.

Processing unit 4 includes an amplification and analog to digital conversion circuit, and a microprocessor unit including a non-volatile internal-external storage for programming.

Connector 6 is liquid-tight and carries 2, 3 or 4 terminals, according to the type of application. Since the device is of a one piece construction, it is easy to take into account the tolerances and the thermal drifts of the components, in order to compensate them through the microprocessor. The drift and offset compensation is obtained by calibrating both the sensitive and logical parts at predetermined reference temperatures, and by subsequently recording the detected values in the memory. In other words, the device retains in its memory its own single (or intrinsic) characteristic by recording the values detected at the calibration points. In operation, the device will read the detected quantity, by means of the microprocessor, and it will perform an interpolation relative to the calibration points recorded in the memory. In this way the use of mechanical adjusting means such as trimmers or potentiometers, which may be a cause of instability and non controllable drifts, is avoided. The calibration of the device is performed (in a known way) by means of a suitable programming of the microprocessor unit, in order to recover the errors of both the sensing and electronic portions.

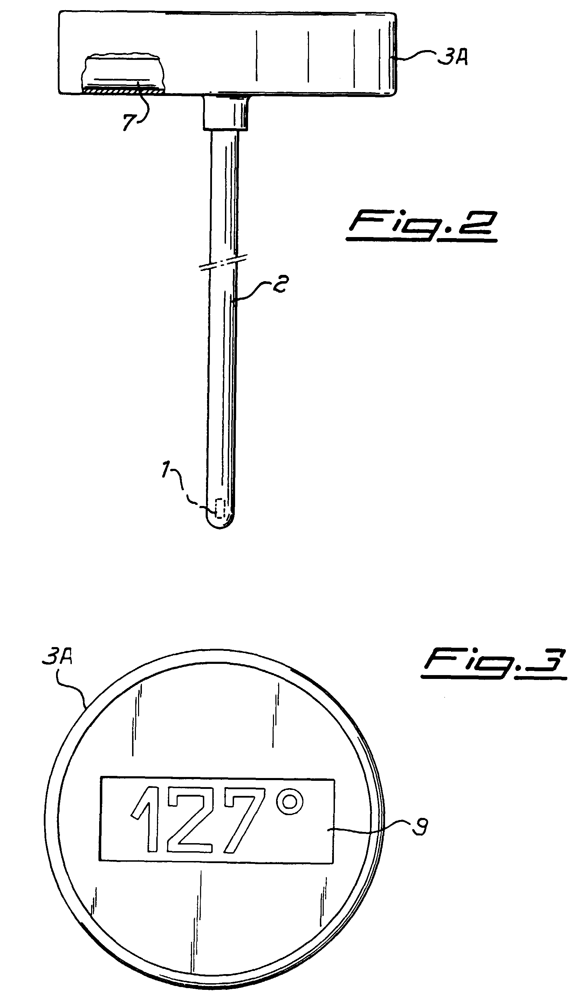

According to an alternative embodiment shown in Figures 2 and 3, wherein the same reference numbers have been used to show identical or similar parts to the ones of Figure 1, container 3A has a flat shape, with a diameter larger than the height thereof, and carries a top mounted digital display shown at 9, which makes it possible to read the measured temperature. In this case, the microprocessor unit is arranged (i.e. programmed) for decoding the temperature data and for driving the display.

The device does not require any external power supply, in that it is provided with an internal battery 7 and/or with photovoltaic cells sufficient for ensuring the power supply for the entire useful life of the device, therefore it can be installed without any leads and position constraints imposed by the presence of a power supply line. This embodiment too provides the above mentioned features of thermal drift and offset compensation.

## Claims

1. A device for temperature measurement and control in industrial plants made as a monolithic water-tight body comprising a temperature probe (1) and a unit (4) for processing the signal provided by said probe, said processing unit (4) being formed by a sealed container (3) including a programmable logic microprocessor unit, and being electrically connected to said probe by a mineral insulated cable (2, 5), wherein said processing unit (4) comprises an own temperature sensor and a permanent memory in which both the internally read and reference temperature data obtained by calibration at predetermined reference temperatures are recorded.

2. The device according to claim 1, wherein said temperature probe (1) includes a thermocouple.

3. The device according to claim 1, wherein said temperature probe (1) includes a platinum resistance thermometer.

4. The device according to any claim 1 to 3, wherein said processing unit (4) is arranged for operating as a thermostatic device.

5. The device according to any claim 1 to 3, wherein said processing unit (4) is arranged for operating as a device for processing and transmitting an electrical signal representing the temperature.

## Patentansprüche

1. Gerät zum Messen und Überwachen der Temperatur in Industrieanlagen in der Form eines monolitischen, wasserdichten Körpers mit einem Temperaturfühler (1) und einer Einheit (4) zur Verarbeitung der Signale des Temperaturfühlers, welche Verarbeitungseinheit (4) gebildet wird durch einen abgedichteten Behälter (3) mit einer programmierbaren, logischen Mikroprozessor-Einheit, die elektrisch mit dem Fühler durch ein Mineral-isoliertes Kabel (2,5) verbunden ist, wobei die Verarbeitungseinheit (4) einen eigenen Temperatursensor und einen Permanentspeicher umfaßt, in dem sowohl die intern abgelesenen und die Bezugstemperaturdaten, die durch Kalibrierung bei vorgegebenen Bezugstemperaturen erhalten werden, gespeichert werden.

2. Gerät nach Anspruch 1, bei dem der Temperaturfühler (1) ein Thermoelement enthält.

3. Gerät nach Anspruch 1, bei dem der Temperaturfühler (1) ein Platin-Widerstandsthermometer enthält.

4. Gerät nach einem der Ansprüche 1 bis 3, bei dem die Verarbeitungseinheit (4) als thermostatische Einheit arbeitet.

5. Gerät nach einem der Ansprüche 1 bis 3, bei dem die Verarbeitungseinheit als Einrichtung zur Verarbeitung und Übertragung eines die Temperatur repräsentierenden elektrischen Signals arbeitet.

## Revendications

1. Dispositif de mesure et de contrôle de température dans des installations industrielles, réalisé en tant que corps monolithique étanche à l'eau comprenant une sonde de température (1) et une unité (4) pour traiter le signal fourni par ladite sonde, ladite unité de traitement (4) étant formée par un conteneur étanche (3) comprenant une unité de microprocesseurs logiques programmables et étant connectée électriquement à ladite sonde par un câble à isolation minérale (2, 5), dans lequel ladite unité de traitement (4) comprend un capteur de température particulier et une mémoire permanente dans laquelle sont enregistrées les données de température lues de manière interne et les données de température de référence obtenues par calibration à des températures de référence prédéterminées.

2. Dispositif selon la revendication 1, dans lequel ladite sonde de température (1) comprend un thermocouple.

3. Dispositif selon la revendication 1, dans lequel ladite sonde de température (1) comprend un thermomètre à résistance en platine.

4. Dispositif selon l'une quelconque des revendications 1 à 3, dans lequel ladite unité de traitement (4) est arrangée pour fonctionner en tant que dispositif thermostatique.

5. Dispositif selon l'une quelconque des revendications 1 à 3, dans lequel ladite unité de traitement (4) est arrangée pour fonctionner en tant que dispositif pour traiter et transmettre un signal électrique représentant la température.
